(19) Europäisches Patentamt
European Patent Office
Office européen des brevets

(11) **EP 1 510 800 B1**

(12) **FASCICULE DE BREVET EUROPEEN**

(45) Date de publication et mention
de la délivrance du brevet:
**27.09.2017 Bulletin 2017/39**

(51) Int Cl.:
***G01K 1/20*** (2006.01)

(21) Numéro de dépôt: **04292105.6**

(22) Date de dépôt: **30.08.2004**

(54) **Procédé de compensation des effets des flux par rayonnement sur un capteur de temperature**

Verfahren zur Kompensation von Strahlungsflusseffekten auf einem Temperatursensor

Method for compensating radiation flux effects on a temperature sensor

(84) Etats contractants désignés:
**AT BE BG CH CY CZ DE DK EE ES FI FR GB GR
HU IE IT LI LU MC NL PL PT RO SE SI SK TR**

(30) Priorité: **01.09.2003 FR 0310351**

(43) Date de publication de la demande:
**02.03.2005 Bulletin 2005/09**

(73) Titulaire: **CENTRE NATIONAL D'ETUDES
SPATIALES
75001 Paris (FR)**

(72) Inventeur: **Verdier, Nicolas
31410 Longages (FR)**

(74) Mandataire: **Lavoix
2, place d'Estienne d'Orves
75441 Paris Cedex 09 (FR)**

(56) Documents cités:
**EP-A- 0 783 097     NL-C1- 1 002 157**

• **MCMILLIN L ET AL: "A PROCEDURE FOR
CORRECTING RADIOSONDE REPORTS FOR
RADIATION ERRORS" JOURNAL OF
ATMOSPHERIC AND OCEANIC TECHNOLOGY,
AMERICAN METEOROLOGICAL SOCIETY,
BOSTON, MA, US, vol. 9, no. 6, 1 décembre 1992
(1992-12-01), pages 801-811, XP000646346 ISSN:
0739-0572**
• **John H Hemmer: "Solar Absorptance and
Thermal Emittance of Some Common Spacecraft
Thermal-Control Coatings", , 1 April 1984
(1984-04-01), XP055269270, Retrieved from the
Internet:
URL:http://www.ntrs.nasa.gov/archive/nasa/
casi.ntrs.nasa.gov/19840015630.pdf [retrieved
on 2016-04-28]**

**Description**

L'invention se rapporte à un procédé de détermination d'une température d'un milieu, par exemple l'air, et à un dispositif de mise en oeuvre de ce procédé.

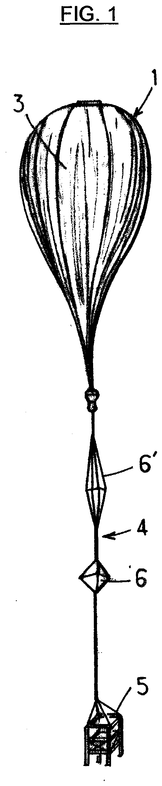

Classiquement, pour mesurer la température des différentes couches de l'atmosphère, on envoie un ballon stratosphérique tel que celui représenté sur la figure 1, conçu pour mesurer, de manière autonome, la température $T_a$ du milieu qui l'environne et dans lequel il est amené à se déplacer.

Le document EP 0 783 097 A1 décrit un procédé et un dispositif capteur de température prévus pour compenser des erreurs de radiation. Selon l'invention, la mesure est faite au moyen de deux capteurs de température ayant chacun de faibles émissivités, mais des coefficients d'absorption des radiations solaires différents.

Le document MCMILLIN L ET AL « A PROCEDURE FOR CORRECTIONG RADIOSONDE REPORTS FOR RADIATION ERRORS » JOURNAL OF ATMOSPHERIC AND OCEANIC TECHNOLOGY, AMERICAN METEOROLOGICAL SOCIETY, BOSTON, MA, US, Vol. 9, no. 6, 1 décembre 1992 (1992-12-01), pages 801-811, XP 000646346 ISSN : 0739-0572 décrit un procédé pour corriger les erreurs de radiation des radiosondes mesurant les températures atmosphériques.

Le document NL1002157 décrit une bouée équipée de deux capteurs identiques de température séparés thermiquement l'un de l'autre, l'un revêtu d'une couche blanche, l'autre d'une couche noire. La couche blanche a une absorption faible et une émissivité importante, la couche noire agit comme un corps noir et a une absorption importante et une émissivité importante.

Le ballon stratosphérique 1 comporte une enveloppe souple 3 qui est destinée à contenir un gaz plus léger que l'air au niveau du sol, et ainsi permettre l'envol du ballon 1. Une chaîne de vol 4, comprenant typiquement une nacelle 5 pouvant emporter des instruments scientifiques, un réflecteur radar 6 et un parachute 6', est fixée en partie basse de l'enveloppe 3.

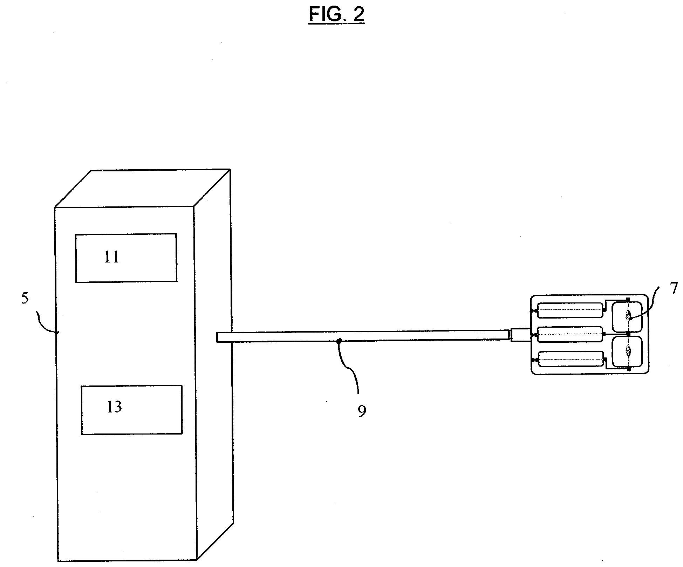

Comme représenté sur la figure 2, un premier capteur de température 7 est généralement fixé à l'extrémité d'un bras longiligne 9 solidaire de la nacelle 5 ou d'une nacelle spécifique. Cette disposition du capteur 7 limite les échanges thermiques entre la nacelle 5 et le capteur 7, à l'origine d'une erreur de mesure.

La nacelle 5 supporte également une unité de pilotage 11 et une unité d'alimentation en énergie électrique 13, connectées électriquement au capteur 7 et entre elles. L'unité d'alimentation en énergie électrique 13 est par exemple une batterie ou un capteur d'énergie solaire.

La température $T_1$ du premier capteur 7 résulte de plusieurs échanges thermiques avec son environnement.

Des échanges par conduction ou « échanges conductifs » ont lieu avec la nacelle 5, via le bras 9, et avec le milieu environnant, en l'occurrence l'air de l'atmosphère. Les échanges conductifs avec la nacelle 5 résultent généralement principalement d'un gradient de température dû au maintien de l'unité de pilotage 13 à une température supérieure à celle de la nacelle 5.

Les échanges par convection ou « échanges convectifs » résultent de la circulation de l'air environnant sur la paroi extérieure du capteur 7.

Le flux thermique net reçu par rayonnement résulte de la différence entre d'une part le flux incident, constitué essentiellement du flux solaire, reçu directement ou après réflexion sur la terre, du flux terrestre et du flux rayonné par le fond du ciel, et d'autre part le flux par rayonnement émis par le capteur lui-même, conformément à la loi du corps noir.

La température $T_1$ du capteur 7 est enfin influencée par son fonctionnement propre. En fonctionnement, le capteur 7 est en effet parcouru par un courant électrique qui, par effet Joule, a tendance à augmenter sa température (auto-échauffement).

Sous l'effet des échanges thermiques mentionnés ci-dessus, le capteur 7 est porté à une température $T_1$ généralement différente de la température du milieu environnant à mesurer, $T_a$.

On connaît des méthodes permettant de limiter ou de corriger les erreurs résultant des échanges par convection et par conduction. En revanche, le capteur de température 7 ne peut être protégé de l'influence des échanges par rayonnement. En effet, tout écran de protection du capteur subit à son tour les rayonnements et induit en conséquence un nouveau flux parasite. De plus, l'auto-échauffement est inévitable.

Il persiste donc toujours une différence entre la température déterminée par l'unité de pilotage 11 au moyen de la mesure $T_1$ du capteur 7 et la température du milieu $T_a$. On appelle ici cette différence « erreur résiduelle ».

L'objectif de l'invention est de fournir un procédé permettant de minimiser cette erreur résiduelle.

Selon l'invention, on atteint ce but au moyen d'un procédé et d'un dispositif conformes aux revendications.

D'autres caractéristiques et avantages de la présente invention apparaîtront à la lecture de la description qui va suivre et à l'examen du dessin annexé dans lequel :

-   la figure 1, partiellement décrite en introduction, représente schématiquement un ballon stratosphérique selon l'invention ;

- la figure 2 représente un dispositif de mesure de température selon l'invention, et

- la figure 3 représente un détail de la figure 2.

Selon l'invention, un deuxième capteur de température 25 est disposé à l'extrémité libre du bras 9 de manière à être soumis sensiblement aux mêmes flux par rayonnement que le premier capteur 7.

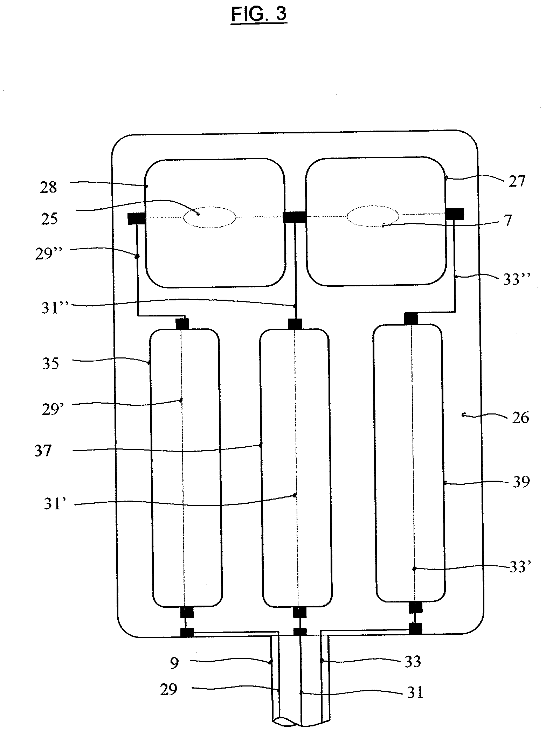

De préférence, le deuxième capteur de température 25 est disposé à proximité immédiate du premier capteur 7, comme représenté sur la figure 3.

Les capteurs 7 et 25 peuvent être collés sur un film polyester 26 de faible épaisseur, par exemple d'environ 100 $\mu$m, transparent, afin de limiter son échauffement par l'intermédiaire des flux radiatifs. De préférence, les capteurs 7 et 25 sont suspendus dans des fenêtres 27 et 28, respectivement, découpées dans le film 26, de manière à limiter les échanges thermiques avec la nacelle 5 et à favoriser des échanges thermiques avec le milieu environnant.

De préférence, les capteurs 7 et 25 sont disposés de manière à ne porter aucune ombre.

Les capteurs 7 et 25 sont connectés électriquement en parallèle, par l'intermédiaire de conducteurs électriques 29, 31 et 33, à l'unité d'alimentation 13 et à l'unité de pilotage 11. De préférence, les conducteurs électriques 29, 31 et 33 sont en un matériau peu conducteur thermiquement, de préférence en nickel ou en platine.

De préférence, une portion 29', 31' et 33' des conducteurs 29, 31 et 33 respectivement, est en contact avec le milieu à mesurer de manière à former une barrière thermique entre les capteurs et la nacelle 5. A cet effet, des fenêtres 35, 37 et 39, traversées par les portions 29', 31' et 33' respectivement, sont de préférence ménagées dans le film 26.

De préférence encore, la section des portions 29", 31" et 33" des conducteurs 29, 31 et 33, respectivement, imprimées sur le film 27, est de faible surface pour limiter leur conductance thermique. De préférence, la largeur des portions 29", 31" et 33" est inférieure ou égale à 0,3 mm et leur épaisseur inférieure ou égale à 10 $\mu$m.

Selon l'invention, les premier et deuxième capteurs sont choisis de manière que, si $\alpha_1$ et $\alpha_2$ désignent leurs coefficients thermo-optiques d'absorption du rayonnement solaire visible respectifs, et si $\varepsilon_1$ et $\varepsilon_2$ désignent leurs coefficients thermo-optiques d'émissivité dans l'infrarouge respectifs,

$$(6) \qquad \alpha_2/\varepsilon_2 = \alpha_1/\varepsilon_1$$

$\alpha_1$ et $\varepsilon_1$ sont identiques, tout comme $\alpha_2$ et $\varepsilon_2$.

Par hypothèse, le capteur dont le coefficient d'émissivité est le plus faible est le premier capteur 7, c'est-à-dire $\varepsilon_1 \le \varepsilon_2$

Comme on le verra plus en détail dans la suite de la description, il est en outre préférable de choisir les capteurs de manière à minimiser $\varepsilon_2/(\varepsilon_2 -\varepsilon_1)$. De préférence, $\varepsilon_2 > 2.\varepsilon_1$, et de préférence encore, $\varepsilon_2 > 9.\varepsilon_1$.

Pour fabriquer des capteurs de température présentant des coefficients thermo-optiques adaptés, il est préférable d'utiliser des premier et deuxième capteurs identiques, mais recouverts de revêtements adaptés. L'utilisation de capteurs identiques permet avantageusement de disposer de deux capteurs fonctionnant de la même façon et dont les auto-échauffements sont les mêmes. Il est ainsi possible de s'affranchir des dimensions des capteurs dans le calcul de compensation.

Classiquement, les coefficients thermo-optiques d'absorption du rayonnement solaire visible et les coefficients thermo-optiques d'émissivité dans l'infrarouge sont compris entre 0,15 et 0,95.

Quand on mentionne des échanges par rayonnement « d'un capteur », on entend plus précisément les échanges de sa surface extérieure exposée à ces rayonnements, surface dont la température est la température mesurée par le capteur. De même, les coefficients thermo-optiques « d'un capteur » désignent plus précisément les coefficients thermo-optiques de cette surface.

De préférence, les premier et deuxième capteurs ont des surfaces $S_1$ et $S_2$ exposées aux rayonnements égales. On désigne l'étendue de ces surfaces par $S_c$.

Le fonctionnement du dispositif représenté sur la figure 1 est le suivant.

Pour déterminer la température $T_a$ du milieu, l'unité de pilotage 11 commande aux premier et deuxième capteurs, 7 et 25 respectivement, disposés dans le milieu d'effectuer des première et deuxième mesures, respectivement. Les premier et deuxième capteurs mesurent alors les températures et $T_2$ de leurs surfaces $S_1$ et $S_2$ et transmettent à l'unité de pilotage 11 ces mesures. L'unité de pilotage évalue alors la température du milieu $T_a$ par la formule suivante :

$$(1) \qquad T_a = \lambda\, T_1 + (1-\lambda)\, T_2,$$

dans laquelle $\lambda = \alpha_2/(\alpha_2 - \alpha_1) = \varepsilon_2/(\varepsilon_2 - \varepsilon_1)$.

Sans être lié par une quelconque théorie, la Demanderesse explique les performances obtenues grâce au procédé selon l'invention de la manière suivante.

On suppose que les surfaces $S_1$ et $S_2$, de même étendue, sont exposées de la même manière et reçoivent les mêmes flux radiatifs $P_s$, $P_t$, $P_a$ et $P_f$.

$P_s$ (ou « flux solaire) et $P_a$ (ou « flux albedo ») désignent les flux radiatifs d'origine solaire reçus directement et après réflexion sur la terre, respectivement. $P_s$ et $P_a$ sont uniquement dans le domaine du rayonnement visible. Une surface réfléchit une partie des flux $P_s$ et $P_a$ et en absorbe une partie égale à $\alpha.P_s$ et $\alpha.P_a$ respectivement, où $\alpha$ est le coefficient d'absorption du rayonnement solaire visible de la surface considérée.

$P_t$ (ou « flux tellurique ») et $P_f$ (ou « flux du fond du ciel ») désignent le flux d'origine terrestre et le flux reçu du fond du ciel, respectivement. Compte tenu des températures de la terre et du fond du ciel, et conformément à la loi d'émission du corps noir, ces émissions se situent dans l'infrarouge. Une surface réfléchit une partie des flux $P_t$ et $P_f$ et en absorbe une partie égale à $\varepsilon.P_t$ et $\varepsilon.P_f$, respectivement, ou est le coefficient d'émissivité dans l'infra-rouge de la surface considérée.

$P_{re1}$, et $P_{re2}$ désignent les flux radiatifs émis par les surfaces $S_1$ et $S_2$, respectivement, conformément à la loi d'émission du corps noir. Cette émission se situe dans l'infrarouge et est égale, pour un capteur considéré, à

$$\varepsilon.S_c.\,\sigma.T_c^{\,4}$$

avec

- $\varepsilon$ : coefficient d'émissivité dans l'infra-rouge de la surface considérée,
- $S_c$ : étendue de la surface considérée,
- $\sigma$ : constante de Stefan-Boltzman ($5,67 \times 10^{-8}$ W/m$^2$K$^4$),
- $T_c$ : température de la surface considérée.

$P_{r1}$ et $P_{r2}$ désignent les flux radiatifs nets reçus par les surfaces $S_1$ et $S_2$, respectivement. A l'équilibre thermique, c'est-à-dire quand les températures $T_1$ et $T_2$ ne varient sensiblement plus dans le temps du fait de la stabilité dans le temps de la température $T_a$ du milieu environnant, le bilan thermique des surfaces $S_1$ et $S_2$ peut être évalué par

$$P_{r1} = \alpha_1.(P_s + P_a) + \varepsilon_1.(P_t + P_f) - \varepsilon_1.S_c.\,\sigma.T_1^{\,4}\,,$$

et

$$P_{r2} = \alpha_2.(P_s + P_a) + \varepsilon_2.(P_t + P_f) - \varepsilon_2.S_c.\,\sigma.T_2^{\,4}\,,$$

où $T_1$ et $T_2$ désignent les températures des surfaces exposées aux rayonnements des premier et deuxième capteurs, respectivement, c'est-à-dire représentent des mesures des températures mesurées par ces capteurs.

A l'équilibre, on peut exprimer la température de chaque capteur par

$$T_1 = T_a + P_{r1}/G_{ac}$$

et

$$T_2 = T_a + P_{r2}/G_{ac}$$

où $G_{ac}$ est la conductance thermique par convection entre le capteur et le milieu. $G_{ac}$ peut être classiquement calculé selon la formule suivante :

$$G_{ac} = \pi.L.\mu.Nu$$

où $\mu$ est la conductivité thermique du milieu environnant, Nu est le nombre de Nusselt, et L est une grandeur caractéristique du capteur, connue de l'homme du métier. Par exemple, L désigne la longueur d'un capteur cylindrique.

Les inventeurs ont découvert qu'une combinaison linéaire $T_x$ de $T_1$ et $T_2$ permet d'isoler une erreur « radiative » $\Sigma$. En effet, si on pose

$$T_x = \lambda\, T_1 + (1-\lambda)\, T_2,$$

on aboutit à

$$T_x = T_a + \Sigma, \quad \text{où } \Sigma = (\lambda.P_{r1} + (1 - \lambda).P_{r2})/G_{ac}.$$

En développant $P_{r1}$ et $P_{r2}$, les inventeurs ont également découvert que, si

$$(4) \qquad \lambda = \alpha_2 / (\alpha_2 - \alpha_1)$$

l'erreur radiative est avantageusement indépendante des flux radiatifs solaire et d'albedo. De préférence, $\lambda$ est donc choisi tel que

$$(2) \qquad 0{,}9.\alpha_2 / (\alpha_2 - \alpha_1) \leq \lambda \leq 1{,}1.\alpha_2 / (\alpha_2 - \alpha_1),$$

et, selon l'invention, encore tel que

$$(4) \qquad \lambda = \alpha_2 / (\alpha_2 - \alpha_1).$$

En développant $Pr_1$ et $Pr_2$, les inventeurs ont également découvert que, si

$$(5) \qquad \lambda = \varepsilon_2 / (\varepsilon_2 - \varepsilon_1),$$

l'erreur radiative est avantageusement indépendante du flux radiatif tellurique et du flux émis par le fond du ciel.
$\lambda$ est donc choisi tel que

$$(3) \qquad 0{,}9.\varepsilon_2 / (\varepsilon_2 - \varepsilon_1) \leq \lambda \leq 1{,}1.\varepsilon_2 / (\varepsilon_2 - \varepsilon_1),$$

et encore tel que

$$(5) \qquad \lambda = \varepsilon_2 / (\varepsilon_2 - \varepsilon_1),$$

Avantageusement, comme $\lambda$ respecte à la fois les relations (4) et (5), l'erreur radiative $\Sigma$ est indépendante des flux radiatifs $P_s$, $P_a$, $P_t$ et $P_f$, et est minimale.
De préférence, les revêtements des capteurs sont choisis de manière que $\lambda$ puisse être déterminé de manière à respecter à la fois les relations (2) et (3). Les revêtements des capteurs sont choisis selon l'invention de manière que $\lambda$ puisse être déterminé de manière à respecter à la fois les relations (4) et (5). Dans ce dernier cas,

$$(6) \qquad \alpha_2/\varepsilon_2 = \alpha_1/\varepsilon_1$$

En particulier, les capteurs sont choisis tels que $\alpha_1 = \varepsilon_1$ et $\alpha_2 = \varepsilon_2$.
Quand $\lambda$ respecte à la fois les relations (4) et (5), $T_x$ représente une évaluation de la température $T_a$ sensiblement indépendante des échanges thermiques par rayonnement des capteurs avec la terre, le fond du ciel et le soleil. Comme on le verra plus en détail dans les exemples ci-dessous, la combinaison linéaire $T_x$ permet ainsi de « compenser » efficacement l'erreur radiative résultant de ces échanges.

Quand $\lambda = \alpha_2 / (\alpha_2 - \alpha_1)$ et $\lambda = \varepsilon_2 / (\varepsilon_2 - \varepsilon_1)$, c'est-à-dire que $\alpha_2/\varepsilon_2 = \alpha_1/\varepsilon_1$

$$\Sigma = \Gamma \cdot \varepsilon_1.S_c.\sigma.T_1^4/G_{ac},$$

où $\Gamma = (1 - T_2^4/T_1^4).\varepsilon_2 / (\varepsilon_2 - \varepsilon_1)$ est un coefficient d'atténuation.

Selon l'invention, il convient donc, pour diminuer $\Sigma$, de mettre en oeuvre une ou plusieurs des consignes suivantes.

- Choisir un premier capteur 7 présentant un coefficient d'émissivité $\varepsilon_1$ le plus faible possible, de préférence inférieur ou égal à 0,3, de préférence encore inférieur à 0,2.
- Choisir des capteurs présentant des surfaces d'échange $S_1$ et $S_2$ les moins étendues possible, de préférence telles que $S_c < 2$ mm$^2$.
- Choisir les capteurs de manière que $\varepsilon_2/\varepsilon_1$ soit le plus élevé possible. De préférence, $\varepsilon_2 > 2.\varepsilon_1$, de préférence encore, $\varepsilon_2 > 9.\varepsilon_1$. Compte tenu de la relation (6), ces modes de réalisation de l'invention correspondent $\alpha_2 > 2.\alpha_1$ et $\alpha_2 > 9.\alpha_1$, respectivement.
- Alimenter les capteurs 7 et 25 en énergie de manière intermittente.

Par exemple un capteur Thermitance 0603® alimenté pendant 1 ms toutes les 5 secondes induit une erreur due à l'autoéchauffement inférieure d'un facteur 1000 à celle qu'il induit quand il est alimenté en continu.

Si la différence $\Delta T$ entre $T_2$ et $T_1$ est très inférieure à $T_1$, $(1-T_2^4/T_1^4)$ peut être approximé par $4.\Delta T/T_1$.

Si $\varepsilon_2 > 2,\varepsilon_1$, alors $\varepsilon_2 / (\varepsilon_2 - \varepsilon_1) < 2$. Compte tenu de l'approximation précédente, $\Gamma = (1-T_2^4/T_1^4).\varepsilon_2 / (\varepsilon_2 - \varepsilon_1)$ est donc inférieur à $8.\Delta T/T_1$.

A titre d'exemple, si $\Delta T$ est inférieur à 25°C, on peut donc garantir, pour une température $T_1$ de -70°C, un coefficient d'atténuation $\Gamma$ inférieur à 1.

De préférence, le coefficient d'atténuation $\Gamma$ est calculé avant chaque mesure de manière à évaluer la pertinence du calcul différentiel.

Les exemples suivants sont fournis à titre illustratif et non limitatif.

Des ballons stratosphériques ont été envoyés dans l'atmosphère équipés d'un dispositif selon l'invention. Ce dispositif comportait des premier et deuxième capteurs choisis identiques et recouverts respectivement d'un dépôt d'aluminium et d'une peinture noire mate, appliqués selon des techniques connus de l'homme du métier. Ces revêtements présentent avantageusement des coefficients d'absorption du rayonnement solaire visible égaux à leurs coefficients d'émissivité dans l'infrarouge respectifs. Ainsi $\alpha_1 = \varepsilon_1 = 0,3$ et $\alpha_2 = \varepsilon_2 = 0,9$.

Des capteurs Perle 127 um®, Thermistance 0603® et Thermistance 0805®, commercialisés par les sociétés VECO et MURATA, respectivement, ont été testés. Les mesures de température ont été effectuées au sol et à 35 kilomètres d'altitude, en phase de plafonnement, le ballon ayant une vitesse sensiblement nulle relativement au milieu environnant, à l'équilibre thermique.

Toutes les conditions opératoires étaient les mêmes que le procédé selon l'invention soit mis en oeuvre ou pas.

Le tableau 1 suivant permet de comparer les erreurs sur l'évaluation de la température du milieu $T_a$, selon que le procédé selon l'invention a été mis en oeuvre ou pas pour compenser l'erreur radiative.

Tableau 1 : Effet du procédé selon l'invention sur l'erreur de mesure de la température $T_a$ du milieu environnant

| Capteur testé | Perle 127 um® | | Thermistance 0603® | | Thermistance 0805® | |
|---|---|---|---|---|---|---|
| Altitude | 0 km | 35 km | 0 km | 35 km | 0 km | 35 km |
| Erreur de mesure (en K) Sans compensation | 0,123 | 1,703 | 0,25 | 3,35 | 0,40 | 5,26 |
| Erreur de mesure (en K) Avec compensation | 0,023 | 0,063 | 0,06 | 0,25 | 0,18 | 0,21 |

Quels que soient le capteur utilisé et l'altitude des mesures, on constate que le procédé selon l'invention compense efficacement l'erreur due aux échanges par rayonnement et améliore la précision de la mesure.

Comme cela apparaît clairement à présent, le dispositif selon l'invention permet une détermination de la température d'un milieu l'environnant avec une erreur minimisée. Le procédé selon l'invention permet en effet d'annuler les effets du rayonnement solaire direct, du rayonnement tellurique direct, du rayonnement albédo et du rayonnement du fond du ciel. Grâce au facteur d'atténuation $\Gamma$, le procédé selon l'invention permet encore de réduire l'effet du rayonnement propre aux capteurs.

Bien entendu, la présente invention n'est pas limitée au mode de réalisation décrit et représenté fourni à titre d'exemple illustratif et non limitatif, mais par les revendications.

**Revendications**

1. Procédé de détermination d'une température $T_a$ d'un milieu, comportant les étapes successives suivantes :

   a) mesure de ladite température $T_a$ au moyen de premier (7) et deuxième (25) capteurs de température disposés dans ledit milieu, $\alpha_1$ et $\alpha_2$ désignant les coefficients thermo-optiques d'absorption du rayonnement solaire visible desdits premier (7) et deuxième (25) capteurs, respectivement,
   b) évaluation ladite température $T_a$ au moyen de la formule (1) suivante :

$$(1) \qquad T_a = \lambda\, T_1 + (1\text{-}\lambda)\, T_2,$$

   dans laquelle

$$(3) \qquad 0{,}9.\varepsilon_2 / (\varepsilon_2 - \varepsilon_1) \leq \lambda \leq 1{,}1.\varepsilon_2 / (\varepsilon_2 - \varepsilon_1)$$

   où

   - $T_1$ et $T_2$ désignent des première et deuxième mesures effectuées au moyen desdits premier (7) et deuxième (25) capteurs de température, respectivement, pendant l'étape a),
   - et $\varepsilon_1$ et $\varepsilon_2$ désignent les coefficients thermo-optiques d'émissivité dans l'infrarouge desdits premier (7) et deuxième (25) capteurs, respectivement,
   - et :

$$(4) \qquad \lambda = \alpha_2 / (\alpha_2 - \alpha_1)$$

   et

$$(5) \qquad \lambda = \varepsilon_2 / (\varepsilon_2 - \varepsilon_1),$$

   le procédé étant **caractérisé en ce que** $\alpha_1 = \varepsilon_1$ et $\alpha_2 = \varepsilon_2$.

2. Procédé selon la revendication 1, **caractérisé en ce que**

$$(7) \qquad \alpha_2 > 2.\alpha_1$$

   et

$$(8) \qquad \varepsilon_2 > 2.\varepsilon_1$$

3. Procédé selon la revendication 2, **caractérisé en ce que**

$$(9) \qquad \alpha_2 > 9.\alpha_1$$

et

$$(10) \qquad \varepsilon_2 > 9 . \varepsilon_1$$

**4.** Procédé selon l'une quelconque des revendications précédentes, **caractérisé en ce qu'**on alimente au moins un desdits capteurs de manière intermittente.

**5.** Dispositif de détermination de la température ($T_a$) d'un milieu l'environnant, comportant au moins une unité de pilotage (11), et des premier (7) et deuxième (25) capteurs de température disposés dans ledit milieu et aptes à effectuer des première ($T_1$) et deuxième ($T_2$) mesures de ladite température, respectivement, et à transmettre lesdites mesures à ladite unité de pilotage (11), **caractérisé en ce que** ladite unité de pilotage (11) est programmée de manière à évaluer ladite température à partir desdites mesures ($T_1,T_2$) selon un procédé conforme à l'une quelconque des revendications 1 à 4, les coefficients thermo-optiques d'absorption du rayonnement solaire visible ($\alpha_1$, $\alpha_2$) et thermo-optiques d'émissivité dans l'infrarouge ($\varepsilon_1,\varepsilon_2$) respectivement des premier et deuxième capteurs (7,25) étant choisi de sorte que $\dfrac{\alpha_2}{\varepsilon_2} = \dfrac{\alpha_1}{\varepsilon_1}$ et de sorte que $\alpha_1 = \varepsilon_1$ et $\alpha_2 = \varepsilon_2$.

**6.** Dispositif selon la revendication 5 **caractérisé en ce qu'**on dispose lesdits premier (7) et deuxième (25) capteurs de manière qu'ils reçoivent des flux par rayonnement sensiblement identiques.

**7.** Ballon stratosphérique (1) destiné à la mesure de températures de différentes couches de l'atmosphère, **caractérisé en ce qu'**il comporte un dispositif conforme à l'une quelconque des revendications 5 et 6.

**Patentansprüche**

**1.** Verfahren zur Bestimmung einer Temperatur $T_a$ eines Mediums, die folgenden aufeinander folgenden Schritte umfassend:

a) Messen der Temperatur $T_a$ mittels eines ersten (7) und eines zweiten (25) Temperatursensors, die in dem Medium angeordnet sind, wobei $\alpha_1$ und $\alpha_2$ die thermooptischen Absorptionskoeffizienten der sichtbaren Sonnenstrahlung jeweils des ersten (7) und zweiten (25) Sensors bezeichnen,
b) Auswerten der Temperatur $T_a$ mittels der folgenden Formel (1):

$$(1) \qquad T_a = \lambda T_1 + (1 - \lambda)T_2 \,,$$

in der

$$(3) \qquad 0{,}9 \cdot \varepsilon_2 / (\varepsilon_2 - \varepsilon_1) \le \lambda \le 1{,}1 \cdot \varepsilon_2 / (\varepsilon_2 - \varepsilon_1)$$

wobei

- $T_1$ und $T_2$ die erste und zweite Messung bezeichnen, die jeweils mittels des ersten (7) und zweiten (25) Temperatursensors während des Schrittes a) durchgeführt werden,
- und $\varepsilon_1$ und $\varepsilon_2$ die thermooptischen Koeffizienten des Emissionsvermögens im infraroten Bereich jeweils des ersten (7) und zweiten (25) Sensors bezeichnen,
- und:

$$(4) \qquad \lambda = \alpha_2 / \alpha_2 - \alpha_1)$$

und

$$(5) \qquad \lambda = \varepsilon_2 / (\varepsilon_2 - \varepsilon_1),$$

wobei das Verfahren **dadurch gekennzeichnet ist, dass** $\alpha_1 = \varepsilon_1$ und $\alpha_2 = \varepsilon_2$ ist.

2. Verfahren nach Anspruch 1, **dadurch gekennzeichnet, dass**

$$(7) \qquad \alpha_2 > 2 \cdot \alpha_1$$

und

$$(8) \qquad \varepsilon_2 > 2 \cdot \varepsilon_1$$

ist.

3. Verfahren nach Anspruch 2, **dadurch gekennzeichnet, dass**

$$(9) \qquad \alpha_2 > 9 \cdot \alpha_1$$

und

$$(10) \qquad \varepsilon_2 > 9 \cdot \varepsilon_1$$

ist.

4. Verfahren nach einem beliebigen der vorhergehenden Ansprüche, **dadurch gekennzeichnet, dass** mindestens einer der Sensoren intermittierend versorgt wird.

5. Vorrichtung zur Bestimmung der Temperatur ($T_a$) eines Umgebungsmediums, die mindestens eine Steuereinheit (11) und einen ersten (7) und zweiten (25) Temperatursensor aufweist, die in dem Medium angeordnet sind und geeignet sind, erste ($T_1$) und zweite ($T_2$) Messungen der Temperatur jeweils durchzuführen, und die Messungen an die Steuereinheit (11) zu übertragen, **dadurch gekennzeichnet, dass** die Steuereinheit (11) derart programmiert ist, dass die Temperatur aus den Messungen ($T_1$, $T_2$) gemäß einem Verfahren nach einem beliebigen der Ansprüche 1 bis 4 auszuwerten, wobei die thermooptischen Koeffizienten der Absorption der sichtbaren Sonnenstrahlung ($\alpha_1$, $\alpha_2$) und die thermooptischen Koeffizienten des Emissionsvermögens im infraroten Bereich ($\varepsilon_1$, $\varepsilon_2$) jeweils des ersten und zweiten Sensors (7, 25) derart gewählt sind, dass $\dfrac{\alpha_2}{\varepsilon_2} = \dfrac{\alpha_1}{\varepsilon_1}$ und derart, dass $\alpha_1 = \varepsilon_1$ und $\alpha_2 = \varepsilon_2$ ist.

6. Vorrichtung nach Anspruch 5, **dadurch gekennzeichnet, dass** der erste (7) und zweite (25) Sensor derart angeordnet sind, dass sie im Wesentlichen identische Strahlungsflüsse empfangen.

7. Stratosphärenballon (1) zur Messung der Temperaturen von unterschiedlichen Atmosphärenschichten, **dadurch gekennzeichnet, dass** er eine Vorrichtung nach einem beliebigen der Ansprüche 5 und 6 aufweist.

**Claims**

1. Method for determining a temperature $T_a$ of a medium, comprising the following successive steps:

a) measuring said temperature $T_a$ by means of a first (7) and a second (25) temperature sensor arranged in said medium, $\alpha_1$ and $\alpha_2$ designating the thermo-optic coefficients of absorption of visible solar radiation of said first (7) and said second (25) sensor respectively,
b) evaluating said temperature $T_a$ using the following formula (1) :

$$(1) \quad T_a = \lambda\ T_1 + (1-\lambda)\ T_2,$$

wherein

$$(3) \quad 0.9.\varepsilon_2/(\varepsilon_2 - \varepsilon_1) \leq \lambda \leq 1.1.\varepsilon_2/(\varepsilon_2 - \varepsilon_1)$$

where

- $T_1$ and $T_2$ designate the first and second measurements taken by said first (7) and said second (25) temperature sensor respectively, during step a),
- and $\varepsilon_1$ and $\varepsilon_2$ designate the thermo-optic coefficients of emissivity in the infrared of said first (7) and second (25) sensor respectively,
- and:

$$(4) \quad \lambda = \alpha_{2/(\alpha_2 - \alpha_1)}$$

and

$$(5) \quad \lambda = \varepsilon_{2/(\varepsilon_2 - \varepsilon_1)},$$

the method being **characterised in that** $\alpha_1 = \varepsilon_1$ and $\alpha_2 = \varepsilon_2$.

2. Method according to claim 1, **characterised in that**

$$(7) \quad \alpha_2 > 2.\alpha_1$$

and

$$(8) \quad \varepsilon_2 > 2.\varepsilon_1.$$

3. Method according to claim 2, **characterised in that**

$$(9) \quad \alpha_2 > 9.\alpha_1$$

and

$$(10) \quad \varepsilon_2 > 9.\varepsilon_1.$$

4. Method according to any of the preceding claims, **characterised in that** at least one of said sensors is powered intermittently.

5. Device for determining the temperature ($T_a$) of a surrounding medium, comprising at least one control unit (11) and a first (7) and a second (25) temperature sensor arranged in said medium and suitable for taking a first ($T_1$) and a second ($T_2$) measurement of said temperature respectively and for transmitting said measurements to said control unit (11), **characterised in that** said control unit (11) is programmed to evaluate said temperature on the basis of

said measurements ($T_1$, $T_2$) by a method according to any of claims 1 to 4, the thermo-optic coefficients of absorption of visible solar radiation ($\alpha_1$, $\alpha_2$) and thermo-optic coefficients of emissivity in the infrared ($\varepsilon_1$, $\varepsilon_2$) respectively of said first and second sensors (7, 25) being selected in such a way that $\dfrac{\alpha 2}{\varepsilon 2} = \dfrac{\alpha 1}{\varepsilon 1}$ and in such a way that $\alpha_1 = \varepsilon_1$ and $\alpha_2 = \varepsilon_2$.

6. Device according to claim 5, **characterised in that** said first (7) and said second (25) sensor are arranged in such a way that they receive substantially identical radiation fluxes.

7. High-altitude balloon (1) for measuring temperatures of different layers of the atmosphere, **characterised in that** it comprises a device according to any one of claims 5 and 6.

## FIG. 1

FIG. 2

## FIG. 3

**EP 1 510 800 B1**

## RÉFÉRENCES CITÉES DANS LA DESCRIPTION

**Documents brevets cités dans la description**

- EP 0783097 A1

- NL 1002157

**Littérature non-brevet citée dans la description**

- **MCMILLIN L et al.** A PROCEDURE FOR CORRECTIONG RADIOSONDE REPORTS FOR RADIATION ERRORS. *JOURNAL OF ATMOSPHERIC AND OCEANIC TECHNOLOGY, AMERICAN METEOROLOGICAL SOCIETY,* 01 Décembre 1992, vol. 9 (6), ISSN 0739-0572, 801-811